# EUROPEAN PATENT APPLICATION

(11) **EP 3 958 197 A1**
(43) Date of publication of application: **23.02.2022**
(21) Application number: 21191558.2
(22) Date of filing: 16.08.2021
(51) Int. Cl.: G06Q 10/06, G06F 8/70

(54) **AN ENTERPRISE SOFTWARE DEVELOPMENT DASHBOARD TOOL**

(30) Priority: 17.08.2020 IN 202021035406
(71) Applicant: Hexaware Technologies Limited, Mahape, Navi Mumbai 400710 (IN)
(72) Inventor: FOX, Neil Evan, Raleigh, 27609 (US); Arnold Dias, Audey, Navi Mumbai Maharashtra - 400709 (IN)
(74) Representative: GatesIP

(57) **Abstract**

A dashboard framework system for monitoring business performance, the system comprising: a processor (140), a memory (142) operatively coupled to the processor (140) and a connector component (204) configured to receive data from business attributes of at least one source program (130) and an analytical component (112) configured to generate an analytics from the received data, the analytical component (112) comprising an analytics engine (216) to track the at least one source program (130) status using quality parameters, and an agile module (210) to provide continuous improvement steps to the business attributes using an agile maturity index score, wherein business formulae are applied to generate the analytics from the received data by the analytical component (112), and wherein the agile maturity index score is calculated for each of the business attributes by the analytical component (112) using the generated analytics.

## Description

### FIELD OF THE INVENTION

The present disclosure relates to a business intelligence dashboard that focuses on software development performance. More specifically, the present disclosure relates to a system and method for an enterprise software development dashboard tool that provides actionable intelligence to various levels of stakeholders within an organisation as an enterprise monitoring tool, while continuing with process adherence and quality standards.

### BACKGROUND OF THE INVENTION

Every year, billions of dollars are invested in software development and maintenance. Additionally, billions of dollars are wasted due to troubled and failed software development programs. Relevant analytics across the entire software development lifecycle has been proven to increase software development process performance and quality, decreasing waste and ensuring positive business impact.

Making software development decisions necessitates having all relevant information at the disposal of the decision-makers. It is critical for decision-makers to be aware of the day-to-day involvement and work progress of many stakeholders at various levels in the organisation, particularly when making investment decisions. Organizational transparency from an individual level to the enterprise level ensures that correct decisions are made by the decision-makers and in correct time period.

Software development or enterprise dashboards with analytics provide meaningful insights into organisational activities, allowing decision-makers to track progress and make informed decisions about software development investments. Making timely and well-informed judgments is also known to boost an organization's business agility.

An enterprise dashboard, in general, provides ongoing information on the performance of a business plan, program, application, or service as prepared by, and according to parameters specified by responsible stakeholders to maximise the likelihood desired results. Such outcomes may include, but are not limited to, the governance, management, culture, business model, programs, products or other deliverables, services, processes, organisational management framework (e.g. balanced scorecard), personnel, work activities or collections of related activities, workflows, and information systems, as well as the performance of one or more of the business enterprise's governance, management, culture, business model, programs, products or other deliverables, services, processes, organisational management framework (e.g. balanced scorecard), and personnel.

However, today's dashboards only cover financial KPIs, leaving a visible gap in having a holistic, aggregated, and transparent view across the project or program lifecycle at all levels of the business. Furthermore, such dashboards only offer a limited analytical picture of the metrics that can be extracted from business data directly. These business dashboards are platform-restricted, implying that they will only work with a limited number of data-gathering tools or sources, necessitating the use of those tools or sources.

With the changing times, agile software development processes are also added that further encourages flexible planning and low reaction time to changing requirements. The agile method divides jobs into small, incremental steps that may be completed with little forethought. Software iterations are created in a short amount of time. Consolidating and enabling project management, product management, customer management, and other stakeholders in a single environment or tool is required by project management systems that have been built to arrange these operations. They are typically unable to communicate with other third-party technologies or collaborate across many development teams or geographically dispersed locales.

In the field of product development, numerous tools and automation settings are used to measure and achieve engineering effectiveness and scaled agile maturity. However, these tools only cover a small number of indicators at the project or program level. Furthermore, these technologies are limited in their ability to provide an analytical view of measurements and majority of application lifecycle management (ALM) technologies offer metrics in silos.

Limited or inappropriate insights into the software development investments of an enterprise may lead to delayed and erroneous decisions by decision-makers. Due to the segmented and largely unorganized business intelligence sector, there exists a need for an enterprise or software development dashboard system to address a variety of issues such as platform independency, providing timely, utilisable insights, and improving business agility while ensuring transparency throughout the various levels of stakeholders.

Because of the complex parameters and effort required in a dashboard framework system, as well as the time constraints associated with regular updates, there is a need to develop a system and method for a dashboard framework system that can address these limitations without or with minimal manual assistance while addressing the variety of issues associated with the application and its components.

### SUMMARY OF THE INVENTION

This summary is provided to introduce concepts related to systems and methods for a dashboard framework systemand the concepts are further described below in the detailed description. This summary is neither intended to identify essential features of the claimed subject matter nor is it intended for use in determining or limiting the scope of the claimed subject matter.

In one implementation, a dashboard framework system for monitoring business is disclosed. The system comprises a processor, a memory operatively coupled to the processor, anda connector component configured to receive data from business attributes of at least one source programandan analytical component configured to generate an analytics from the received data. Further, the analytical component comprises an analytics engine to track the at least one source program status using quality parameters, an agile module to provide continuous improvement steps to the business attributes using an agile maturity index score, wherein business formulae are applied to generate the analytics from the received data by the analytical component, and wherein the agile maturity index score is calculated for each of the business attributes by the analytical component using the generated analytics.

In yet another implementation, the dashboard framework system has the connector component configured to receive data from the business attributes for a user configured time period.

In yet another implementation, the dashboard framework system has the connector component with a plurality of sub-connectors for receiving data from a plurality of source programs.

In yet another implementation, the dashboard framework system has the analytical component further comprising: a test case module to analyse a real time performance of a source program.

In yet another implementation, the dashboard framework system has the analytical component further comprising: a vendor module to track a KPI of a vendor.

In yet another implementation, the dashboard framework system has the analytics engine providing a story-point analysis for monitoring the at least one source program to various stakeholder levels, and a risk-projection analysis for highlighting a program risk.

In yet another implementation, the dashboard framework system has the analytical component generating real time key metrics and update thresholds for the key metrics.

In another implementation, the dashboard framework system comprises a display component configured to receive user inputs and to display the analytics as generated by the analytical component.

In another implementation, the dashboard framework system comprises the display component generates a dashboard of the analytics on a user interface, wherein the dashboard has a plurality of selectable hierarchical levels, each of the hierarchical levels including the at least one associated business attribute.

In another implementation, the dashboard framework system comprises a server component configured to have a database, wherein the database has data on the business attributes for the connector component, and on the business formulae for the analytical component.

In one implementation, a method for monitoring business performance is disclosed. The method comprising receiving, by a processor of an application server, data from business attributes of at least one source program, generating, by the processor, an analytics from the received data, comprising: tracking the at least one source program status using quality parameters, providing continuous improvement steps to the business attributes using an agile maturity index score, wherein business formulae are applied to generate the analytics from the received data, and wherein the agile maturity index score is calculated for each of the business attributes using the generated analytics.

In yet another implementation, the method has the receiving data from the business attributes that is for a user configured time period.

In yet another implementation, the method has the receiving data that is from a plurality of sub-connectors for receiving data from a plurality of source programs.

In yet another implementation, the method has the generating an analytics further comprising: analysing a real time performance of a source program.

In yet another implementation, the method has the generating an analytics further comprising: tracking a KPI of a vendor.

In yet another implementation, the method has the tracking of the at least one source program that further provides a story-point analysis for monitoring the at least one source programto various stakeholder levels, and a risk-projection analysis for highlighting a program risk.

In yet another implementation, the method has the generating an analytics that further generates real time key metrics and updates thresholds for the key metrics.

In another implementation, the method comprises, receiving user inputs and displaying the analytics as generated.

In yet another implementation, the method has displaying the analytics on a dashboard by a user interface, wherein the dashboard has a plurality of selectable hierarchical levels, each of the hierarchical levels including the at least one associated business attribute.

In another implementation, the method comprises, configuring a database, wherein the database has data on the business attributes, and on the business formulae.

It is a primary object of the present subject matter to provide a system and a method for a software development dashboard that can collect data from a variety of systems, applications, projects, programs, and portfolios, transform the data, and derive useful analytics, and then display the derived analytics to an individual or a group of individuals who need to make decisions. In addition, the software development dashboard system may enable high-performance teams achieve optimal engineering effectiveness while maintaining maximum transparency and reliability.

It is another object of the subject matter to provide a user interface that allows the users to interact with the software development dashboard through the user interface in order to utilize functionalities from the software development dashboard.

It is another object of the subject matter to provide an analytical component of the software development dashboard framework system that may perform analytics, using specific calculations in order to derive descriptive analytics, predictive analytics and prescriptive analytics from the data supplemented to the analytical component from the connector component; while providing flexible and run-time view of information in terms of technical, business and operational metrics.

It is another object of the subject matter to provide an analytical component of the software development dashboard framework system that derives analytics from the supplemented data mainly for the attributes including but not limited to predictability, productivity, quality, maturity and return-on-investment in order to provide insightful facts to be utilized by the user for business-related decision-making.

It is another object of the subject matter to provide a software development dashboard framework system that may be customized as per the user's requirement, allowing a higher level of customization in the analytical component and a display component, allowing different modules to integrate and interact with each other and create combinations and permutations without the need of changing any other detail in either of the parts of the software development dashboard system.

It is another object of the subject matter to provide a software development dashboard framework system that reduces the time and effort taken by development teams to take business decisions, brings more transparency and get near real time information updates.

It is another object of the subject matter to provide a highly configurable & customizable solution for a software development dashboard framework system that supports scaled agile model and metrics data consolidation is available at project, program, portfolio &enterprise level.

It is another object of the subject matter to provide agile and application service management (ASM) dashboards in a single tool and service level agreement (SLA) based tracking on volumetric & timeliness metrics for ASM projects. Further, alerts and notifies via emails when metrics fall below thresholds and targets and integrates multiple tools.

It is another object of the subject matter to provide engineering effectiveness in technology, business and operational metrics at different levels of individuals, team, project, program, business, and enterprise levels.

It is another object of the subject matter to provide a dashboard that would typically be used by project managers, scrum masters, product owners, program managers, C-level executives, delivery managers, agile coaches who are in different levels of the organization.

It is another object of the subject matter to provide an innovative platform with complete focus to elevate business agility with high performance teams and help attain optimal engineering effectiveness with maximum transparency & reliability.

It is another object of the subject matter to provide an environment that reduces implementation costs, reducing time spent, thereby increasing profitability, increasing the execution speed, enhancing the solution's performance and productivity.

It is another object of the subject matter to provide a number of advantages depending on the particular aspect, embodiment, implementation and/or configuration.

It is another object of the subject matter to provide a platform that can provide reliable execution, scalability, and value-added services, while controlling operating effort and costs.

It is another object of the subject matter to efficiently manage numerous instances simultaneously, work in different regulatory requirements, enable resources to collaborate and work together closely, efficiently and collectively with user friendly interfaces.

These and other implementations, embodiments, processes and features of the subject matter will become more fully apparent when the following detailed description is read with the accompanying experimental details. However, both the foregoing summary of the subject matter and the following detailed description of it represent one potential implementation or embodiment and are not restrictive of the present disclosure or other alternate implementations or embodiments of the subject matter.

### BRIEF DESCRIPTION OF THE DRAWINGS

A clear understanding of the key features of the subject matter summarized above may be had by reference to the appended drawings, which illustrate the method and system of the subject matter, although it will be understood that such drawings depict preferred embodiments of the subject matter and, therefore, are not to be considered as limiting its scope with regard to other embodiments which the subject matter is capable of contemplating. Accordingly:
FIGURE.1 illustrates an exemplary dashboard framework system, in accordance with an embodiment of the present subject matter.
FIGURE.2 illustrates an exemplary dashboard framework system, in accordance with an embodiment of the present subject matter.
FIGURE.3.1 illustrates an exemplary dashboard report generated by a dashboard framework system, in accordance with an embodiment of the present subject matter.
FIGURE.3.2 illustrates an exemplary dashboard report generated by a dashboard framework system, in accordance with an embodiment of the present subject matter.
FIGURE.3.3 illustrates an exemplary dashboard report view generated by a dashboard framework system, in accordance with an embodiment of the present subject matter.
FIGURE.3.4 illustrates an exemplary dashboard report view generated by a dashboard framework system, in accordance with an embodiment of the present subject matter.
FIGURE.4 illustrates an exemplary flow diagram of a method of a dashboard framework system, in accordance with an embodiment of the present subject matter.

### DETAILED DESCRIPTION OF THE INVENTION

The following is a detailed description of implementations of the present disclosure depicted in the accompanying drawings. The implementations are in such detail as to clearly communicate the disclosure.

During an enterprise's path to achieve scaled agile maturity and increase engineering effectiveness in a software product lifecycle, a variety of tools and automation sets are employed. The present solution establishes a single source of truth for scalable agile execution. It gathers data from a range of systems, applications, projects, programs in order to do descriptive, predictive, and prescriptive analytics while also providing a customizable, near-real-time/ real time view of the data. This, along with appropriate technical, business, and operational data for all levels of stakeholders within an organisation, provides the transparency required to make fast and informed decisions and improve business agility.

The solution provides an enterprise dashboard for tracking software development progress and risks that facilitates transparency for all stakeholders in predictability, productivity, quality & agile maturity by organization levels, offers return on investment (ROI) and other business metrics to engage all stakeholders in technology investments. It also gives filtered metrics across organization levels such as enterprise, business unit, program, project, team and individual (in some cases) and that too in an integrated view mode in code quality, build quality and operational (ASM) metrics.

A few of the important features, the solution offers are a customizable options set, set targets and thresholds for key metrics, send alerts when thresholds are not met, collects data at various periodical intervals, detects and mitigates early risks, reviews formally by project governance team monthly and executive team quarterly, provide near real time status & consolidated insight for quick and informed decision-making to elevate team performance. It is capable of interfacing with a variety of application lifecycle management (ALM) tools/data sources in order to perform descriptive analytics, predictive & prescriptive analytics. Also, it's wide range of technical(e.g. code quality, technical debt etc.), business (e.g. ROI) and operational (e.g. productivity, predictive etc.) metrics providing transparency across all stakeholders throughout the process. Unique metrics includes but not limited to predictability, sprint injection, backlog health, impediment scorecard, ROI, code performance index (CPI), schedule performance index (SPI), resource productivity, and alike.

A dashboard framework system for monitoring business performance has a processor 140, a memory 142 operatively coupled to the processor 140, the memory is further operatively coupled to a connector component 204 configured to receive data from business attributes of at least one source program 130 and also to an analytical component 112 configured to generate an analytics from the received data, the analytical component 112 has an analytics engine 216 to track the at least one source program status using quality parameters, an agile module 210 to provide continuous improvement steps to the business attributes using an agile maturity index score. Further, business formulae are applied to generate the analytics from the received data by the analytical component 112, and the agile maturity index score is calculated for each of the business attributes by the analytical component 112 using the generated analytics. A component wise structure and a step wise method is listed below.

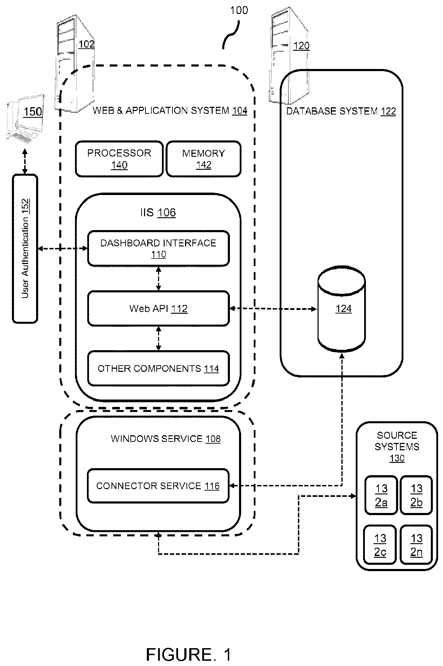

FIGURE. 1 illustrates an exemplary dashboard framework system, in accordance with an embodiment of the present subject matter.

A dashboard framework system 104 implements a method for dashboard framework 100on a web and application server 102, the dashboard framework system 104 also known as a web and application system 104 includes a processor(s) 140, and a memory 142 coupled or in communication to the processor(s) 140 and to an internet information services (IIS) 106 and toa windows service 108, or alike. The processor(s) 140 may be implemented as one or more microprocessors, microcomputers, microcontrollers, digital signal processors, central processing units, state machines, logic circuitries, and/or any devices that manipulate signals based on application environment migration instructions. Among other capabilities, the processor(s) 140 is configured to fetch and execute computer-readable instructions stored in or through the memory 142 or any other connected memory or a storage such as a database. The memory 142 can include any computer-readable medium known in the art including, for example, volatile memory (e.g., RAM), and/or non-volatile memory (e.g., EPROM, flash memory, etc.). The dashboard framework includes but not limited to an integration, a deployment, an automated, or a test framework, and the like.

Although the present disclosure is explained by considering a scenario that the system is implemented as an application on a server, the systems and methods can be implemented in a variety of computing systems. The computing systems that can implement the described method(s) include, but are not restricted to, mainframe computers, cloud platforms, workstations, personal computers, desktop computers, minicomputers, servers, multiprocessor systems, laptops, tablets, SCADA systems, smartphones, mobile computing devices and the like.

The internet information services (IIS) 106 has a dashboard interface(s) 110, a web API 112, and other components 114. The dashboard interface(s) 110may include a variety of software and hardware interfaces, for example, a web interface, a graphical user interface, etc., allowing the system 104 to interact with a user 150. Further, the interface(s) 110 may enable the system 104 to communicate with other computing devices, such as web servers and external data servers, such as a DB server 120 having a database system 122 and a database 124. The windows service 108 has a connector service 116, among other components. The internet information services (IIS) 106 communicates with a database (DB) server 120 having a database system 122 including a database 124, such as a SQL Server. The connector service 116 is further connected to and communicates with source systems 130 such as 132a, 132b, 132c, 132d, ..., 132n.The source systems 132a, 132b, 132c, 132d, ..., 132n together represented as a program are collections or a plurality of programs, projects, tools, systems, excel, enterprise solutions, databases, and such business tools that needs monitoring and are the source of all dashboard business attributes. These attributes/ metrics are analysed to provide a basis of business decisions.

In one implementation, a user 150 accesses a dashboard interface 110 via a user authentication module 152. A user to project/ program mapping is maintained in a database, such as a database 124 or alike. Any user authorization or authentication is controlled using this mapping. A default user is created in advance; all additional users are authenticated using the user authentication module 152. The authentication happens, outside a web and application server 102, managed by identity and access management (IAM) systems or lightweight directory access protocol (LDAP) or alike.

In one implementation, a web and application server 102 has a windows service 108 that has a connector service 116, among other components. The connector service 116 is further connected to and communicates with source systems 130 such as 132a, 132b, 132c, 132d, ..., 132n.

In one implementation, a windows service server has a windows service 108 that has a connector service 116, among other components. The connector service 116 is further connected to and communicates with source systems 130 such as 132a, 132b, 132c, 132d, ..., 132n. The windows service server is different from a web and application server 102 and is communicatively connected separately to both the web and application server 102 and a DB server 120.

A network is used for communicating between all elements including the user 150,the web and application server 102, the DB server 120 and the source systems 130. The network can be a wireless network, a wired network or a combination thereof. The network can be implemented as one of the different types of networks, such as intranet, local area network (LAN), wide area network (WAN), the internet, and the like. The network may either be a dedicated network or a shared network. The network further has access to storage devices residing at a client site computer, a host site server or computer, over the cloud, or a combination thereof and the like. The storage has one or many local and remote computer storage media, including one or many memory storage devices, databases, and the like. In one example, the user 150 connects with the dashboard interface 110 via a HTTP/ HTTPS intranet using a desktop or laptop browser, the web API 112 connects to the SQL server 124 using a HTTP Internet/ Intranet and the SQL server 124 connects with the connector service 116 using ADO.NET.

It is imperative that the computing systems and databases communicate with each other under network or cloud computing rules under the web or other available communication mediums/ protocols. Software applications may be run "in the cloud" by configuring them to execute across one or more of the computing devices in a particular cloud computing environment/ system. The computing devices of a cloud computing system may each execute separate copies of the software application, or, in some cases, the operations of the software application may be split among different computing devices and executed in parallel. A cloud computing system may include a plurality of cloud computing instances representing resources available for executing applications. Each instance may be a physical computing device having particular capabilities (storage size, processing speed, network bandwidth, etc.), or may be a virtual computing device having particular capabilities. A particular cloud computing system may offer different instance types having different sets of capabilities for executing software applications.

In one implementation, a system 104 has hardware and software requirements of deployment asan OS: Windows server 2012 R2 or higher; a web server: IIS 7+; .NET: MS .NET Framework 4.5; RAM: 8 GB (Web), 16 GB (DB); Storage: 50 GB (Web), 100 GB (DB); Processor: 4 cores; SQL Server: SQL Server 2016+ (standard edition); Connectivity: standard access all required projects on JIRA, Jenkins, SonarQube, etc. and has ability to configure Windows service (web server only). The existing instance of an MS SQL Server can be leveraged by adding solution application schema or a dedicated MS SQL Server that will be required for the solution application. As the load increases the hardware configuration has to be scaled up. In one example, it supports JIRA, VersionOne, ServiceNow(4 Metrics), Jenkins, SonarQube. Any customization/ new ALM connector would require more effort based on the requirement. The source systems used are JIRA, Jenkins, SonarQube. In this implementation, access & permissions required are web server permissions to install web application, permissions to configure Windows services (connectors), user with read only access to source systems (JIRA, Jenkins and SonarQube) Web API, read / write access to database, SMTP server details to send email notifications and with SQL Server for DB creation (to create database) and a database user with read/write access to the database.

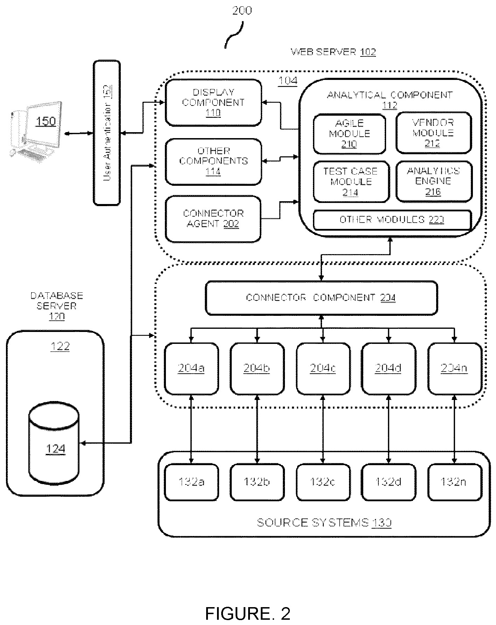

In one implementation, at first, a user 150 including but not limited to a software professional, a database administrator, an application developer, a quality analyst, a testing professional, a project manager, a program manager, an enterprise administrator, any C-Level executive, a vendor, an employee, a consultant or client representative among others may use a user access device to access a dashboard framework system 104 via a dashboard interface 110 of a web and application server 102 using a user authentication module 152. The working of the system 104 and related method and associated modules, sub modules, methods may be explained in detail also using FIG.2, FIG.3.1, FIG.3.2, FIG.3.3, FIG.3.4, and FIG.4 explained below.

FIGURE.2 illustrates an exemplary dashboard framework system, in accordance with an embodiment of the present subject matter.

A dashboard framework system 104 implements a method for dashboard framework 200 on a web and application server 102 or a web server 102, the dashboard framework system 104 also known as web and application system 104 includes a display component110 or a dashboard interface, a connector agent 202, an analytical component 112 or a web API, and other components 114. The display component 110allows the system 104 to interact with a user 150. The analytical component 112 comprises an agile module 210, a vendor module 212, a test case module 214, an analytics engine 216, and other modules 220. The analytical component 112 communicates with a connector component 204 having a connector service 116 and further connected to a plurality of sub-connectors 204a, 204b, 204c, 204d, ..., 204n, such as a JIRA connector, a Jenkins connector, a SonarQube connector, a ServiceNow connector, an Excel connector, and alike for each program, project, or such source systems/ applications 130. Each of the sub-connectors 204a, 204b, 204c, 204d, ..., 204n are respectively coupled to one of a plurality of third party program, project, or such source systems 130 or applications, such as 132a, 132b, 132c, 132d, ..., 132n, such a JIRA, a Jenkins, a SonarQube, a ServiceNow, an Excel file programs. Further, the components of the system 104 communicates to other computing devices, ex web servers and external data servers, such as a DB server 120 having a database system 122 and a database 124.

The enterprise software development dashboard tool of the solution provides the connector component 204, the analytical component 112 and the display component 110. Additionally, the tool also comprises a server component 122of the DB server 120 which remains in constant communication with the analytical component 112.The connector component 204 of the dashboard framework system may be incorporated to gather data from multiple tools, systems and applications 130 in a way that the data is gathered via a predefined function initiated in a specified time period. The analytical component 112may be instructed to receive the data from the connector component 204, applying business formulae onto the data and deriving useful analytics, eventually supplementing said data to the display component 110.The analytical component 112 may further be facilitated to perform analytics in order to derive descriptive analytics, predictive analytics and prescriptive analytics from the data supplemented to the analytical component 112 from the connector sub-connectors 204a, 204b, .., 204n.The analytical component 112 may further derive analytics from the supplemented data mainly for the attributes including but not limited to predictability, productivity, quality, maturity and return-on-investment. The display component 110 of the software development dashboard system may be developed to display the analytics supplemented by the analytical component in a flexible and user-friendly manner.

The display component 110 may further comprise a user interface which allows a user 150 to interact with the dashboard framework system through the user interface in order to utilize functionalities from a dashboard. Further, the dashboard framework system 104 communicates with the DB server 120 having the server component 122 maybe equipped to save all necessary data in the database 124 including data from a variety of systems and applications being gathered from the connector component 204, various business formulae being utilized by the analytical component 112, analytics being derived from the analytical component 112, as well a user's interactional data captured by the display component 110.

In one implementation, a user 150 accesses a display component 110 via a user authentication module 152. A user to project mapping is maintained in a database, such as a database 124 or alike. Any user authorization or authentication is controlled using this mapping. A default user is created in advance; all additional users are authenticated using the user authentication module 152. The authentication happens, outside a web server 102, managed by identity and access management (IAM) systems or lightweight directory access protocol (LDAP) or alike.

The connector component 204 gather data from multiple tools, systems and applications in a way that the data is gathered with in a user configured time period. The connector component 204 has further sub-connectors204a, 204b, 204c, 204d,..., 204n for gathering data from different source tools, systems or applications 130such as 132a, 132b, 132c, 132d, ..., 132n. The sub-connectors 204a, 204b, 204c, 204d, ..., 204ncomprised in the connector component 204 supplement individual data gathered to the connector component 204.Further, the connector component 204 provides the data gathered by the sub-connectors 204a, 204b, ..., 204nto the analytical component 112. The analytical component 112 receives the data from the connector component 204, applies proprietary business formulae onto the data and derives useful analytics, eventually supplementing said data to the display component 110. The display component 110, thereafter, displays the analytics supplemented by the analytical component 112 in a user-friendly manner. Additionally, the analytical component 112 remains in constant communication with the server component 122. A connector agent 202 of the web server 102 is a Windows service and communicates with the analytical component 112 by providing a connection to other components.

In one implementation, a web server 102 has a connector component 204that has sub-connectors204a, 204b, ..., 204n, among other components. The connector component 204is further connected to and communicates with source systems 130 such as 132a, 132b, 132c, 132d, ..., 132n and a DB server 120.

In one implementation, a windows service server has a connector component 204that has sub-connectors204a, ..., 204n, among other components. The connector component 204is further connected to and communicates with source systems 130 such as 132a, 132b, ..., 132n. The windows service server is different from a web and application server 102 and is communicatively connected separately to both the web and application server 102 and a DB server 120.

The analytical component 112 performs analytics, using specific calculations in order to derive descriptive analytics, predictive analytics and prescriptive analytics from the data supplemented to the analytical component 112 from the connector component 204 while providing flexible and run-time view of information in terms of technical, business and operational metrics. Further, the analytical component 112 derives analytics from the supplemented data mainly for the attributes including but not limited to predictability, productivity, quality, maturity and return-on-investment in order to provide insightful facts to be utilized by the user for business-related decision-making. The analytical component 112 facilitates to provide story-point analysis for monitoring a program 130 throughout its lifecycle over the various stakeholder levels, and a risk-projection analysis wherein projects at risk of derailment or delay are highlighted and brought to attention, such that appropriate action may be taken to minimize all possible risk factors and ensure timely delivery.

The agile module 210 of the analytical component 112 follows the agile approach of dividing tasks into short phases of work and frequently reassessing and adapting new approaches in order to ensure quality deliverables in a timely manner. The agile module 210 performs its task by overlooking activities and providing insights on the same. The activities include but may not be limited to capturing requirements, constructing or initiating work, reviewing the constructed work, deploying the same, testing the work for errors, releasing the work to the next level of stakeholders and eventually managing the work. Further, the agile module 210 manages agility by doing and being agile through various agile coaches including but not limited to agile documentation, collaborative planning, continuous integration and delivery, low process ceremony, paired programming, agile estimation, continuous improvement, evolutionary requirements, multi-level adaptive planning and self-organizing team. Additionally, the agile module also calculates an agile maturity index scores for enhancing performance.

In one implementation, agile maturity index is calculated by an analytical component 112 of the software development dashboard system. The agile maturity index is calculated by an agile module 210 of the analytical component 112. As mentioned above, the analytical component 112derives analytics from the data gathered by a connector component 204, mainly for the attributes including but not limited to predictability, productivity, quality, maturity and return-on investment. In order to enhance the performance of the mentioned attributes, agile maturity index scores are calculated for each of the attributes on the basis of the agile coaches. The agile maturity index scores are calculated for parameters including but not limited to customer organization, tools and infrastructure, software agile process, project management and people.

The vendor module 212 of the analytical component 112 assists in keeping track of vendor records and productivities, especially for outsourced work, this further assist in keeping key performance indicators (KPI) of a vendor or a consultant. The KPI generally include productivity, efficiency, quality or other performance indicators as requisite for a particular business. The vendor module 212 comprised in the analytical component 112 calculates vendor productivity on the basis of multiple factors including but not limited to comparative analysis at the vendor and consultant level, story point analysis, summary analysis, resource productivity, and predictability including cost, time and scope variants. Predictability may also be calculated on the basis of a schedule performance index and a cost performance index.

The test case module 214 is a review module which reviews the work being performed by individuals in an organization. The test case module 214 of the analytical component 112 identifies test case scenarios based on multiple parameters including but not limited to coverage percentage, completion percentage, executed pass percentage and executed failure percentage which assist in analysing the performance of a project or program as being developed or worked upon.

The analytics engine 216 facilitates the various analytics required to track the progress of a project or program effectively. The analytics engine 216 of the analytical component 112 tracks the progress of a project by way of parameters including but not limited to trend analysis, defect analysis, critical and high defect fixes, defect density, defects by status, as well as defects by severity, code or work quality and build quality.

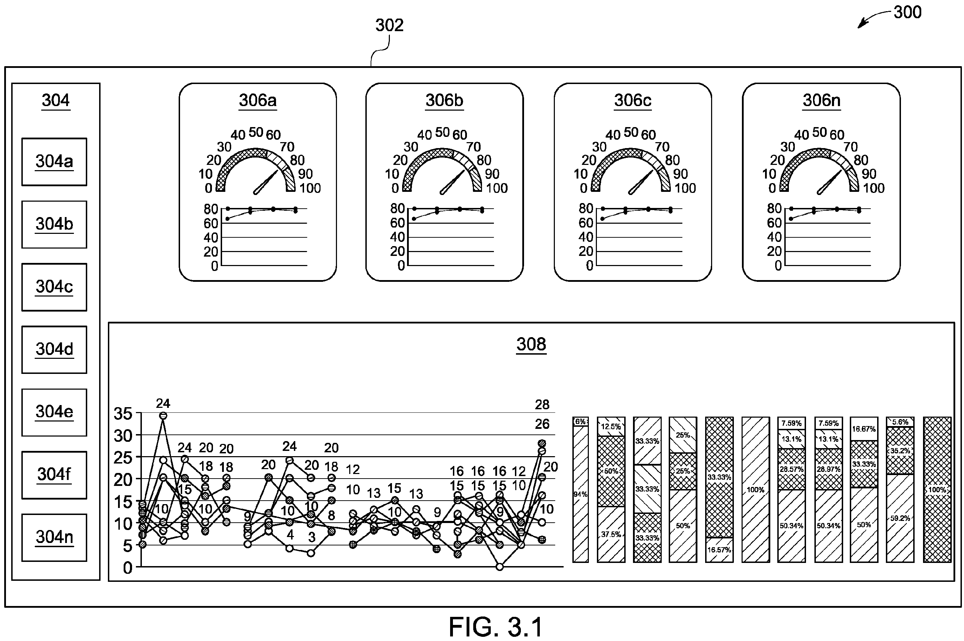

FIGURE.3.1 illustrates an exemplary dashboard report 300 generated by a dashboard framework system, in accordance with an embodiment of the present subject matter.

An analytical component 112 generates analytics and sends to a display component 110 and is accessed by a user 150 via a user interface. The analytics are generated after tracking the at least one source program status using quality parameters, providing continuous improvement steps to the business attributes using an agile maturity index score, where business formulae are applied to generate the analytics from the received data, and an agile maturity index score is calculated for each of the business attributes using the generated analytics. The analytics generated are accessed in a dashboard 302 via a user interface. The dashboard framework system has the display component 110 that generates the dashboard 302of the analytics on a user interface, where the dashboard 302 has a plurality of selectable hierarchical levels 304a, 304b, 304c, 304d, 304e, 304f, ..., 304n,also represented together as a section 304 with each of the hierarchical levels 304a, 304b, 304c, 304d, 304e, 304f, ..., 304n including the at least one associated business attribute. Generally, the dashboard 302 have sections like business attribute sections 306a, 306b, 306c, ..., 306n covering the status or reading with a scan/ graphs or visual depiction of business attributes and associated scans/ graphs/ visual depictions in 308 that develop when further details or options or next hierarchical levels are selected by the user 150.

The landing page of the enterprise dashboard gives a quick snapshot elaborating multiple critical attributes covering current status and the trend till date. It provides a view at the enterprise business unit or portfolio, program, project and in a few cases team and individual levels allowing users to drill down to a closer level of detail. Logged in users can see data and work stream metrics, such as 306, 308 at their respective levels. Projects at risk are highlighted and alerts are triggered when they fall below the threshold. Return on investment (ROI), for example at 304d, is another important metric for C-level executives showcasing efficiency of investment. ROI graph, for example at 308, shows the expected spend against the actual spend along with allied details, it also gives details of the projected investment, if relevant financial data points are made available for integration.

Key metrics beyond source application program or project to support detailed reporting for continuous improvements from agile teams to senior management includes productivity, predictability, quality and ROI. Productivity option 304a, metric 306a covers team's average velocity, program velocity, impediments scorecard, release burn down w/ all dimensions, vendor productivity. This ranges release burn down, other than work completion trend, it also tracks requirement volatility trends by sprint to help predict revised date of delivery. Impediment score card 308 would directly reflect on the impediment status and hence the efficiency of the scrum master backlog health would directly reflect on the feature clarity and hence the efficiency of the product owner. Predictability option 304b, metric 306b covers scope variance, schedule variance, cost variance, SPI & CPI (EVM), supports predictability around time, cost, scope. concept of earned value measurement in agile to measure the cost performance index i.e. CPI and schedule performance index i.e. SPI. The CPI and SPI value greater than 1 indicates a positive. Application service management (ASM) covers open & closed tickets, average ticket age, mean time to recovery/ restore/ repair (MTTR), mean time to service (MTTS) compliance by priority, volumetric metrics by portfolio, status, root cause analysis (RCA), priority. Out of the box connectors for JIRA, VersionOne, TFS, VSTS, SonarQube, Jenkins, ServiceNow & HP-ALM. Quality parameters covers - code quality that includes code complexity, vulnerability, code coverage, function point analysis, job statistics by status. ex ― SonarQube. Quality parameters covers build quality that includes job statistics by status, build statistics, test statistics by job, job statistics by status. Ex- Jenkins. Test statistics by job covers team's average defect density (defects / story points), program avg. defect density, team's average % unit test coverage, program % unit test coverage and QA performance covers team's average defect density (defects / story points), program avg. defect density, team's average % unit test coverage, program % unit test coverage.

All subsequent views would be the same for all users with the relevant work stream and data point restricted access. A near real time view of backlog health would directly reflect on the feature clarity and hence the efficiency of the product owner, a near real time view of the impediment scorecard would directly reflect on the impediment status and hence the efficiency of the scrum master. Along with the work completion trend the release burn down also tracks requirement volatility trends by sprint to help in predicting a revised date of delivery as a result of the voice of customer in a multi-vendor scenario solution provides comparative analysis at the vendor and the consultant level.

Story point analysis, such as 304f provides comparative analysis on story points delivered by each consultant, by project and by sprint. Summary analysis across consultants is comparative analysis giving the count of delivered user stories tasks subtasks and defects by each consultant resource productivity gives count of tasks and subtasks delivered by the selected consultant, by project and by sprint. Further, cost time and scope variants are used as the contributing factors to determine predictability. The concept of earned value measurement in agile to measure the cost performance index and schedule performance index to depict cost and schedule variance respectively. The CPI and SPI value greater than one indicates a positive. The ratio of accepted and committed story points calculates the scope variants. A positive scope variance indicates that the team delivered more than commitment. This shows the quality of deliverable by test case coverage and testing execution outcomes until the last completed by sprint. There are various other dashboard attributes, metrics, pertaining to business, customizable by users and dependent on type of software development tools used or required.

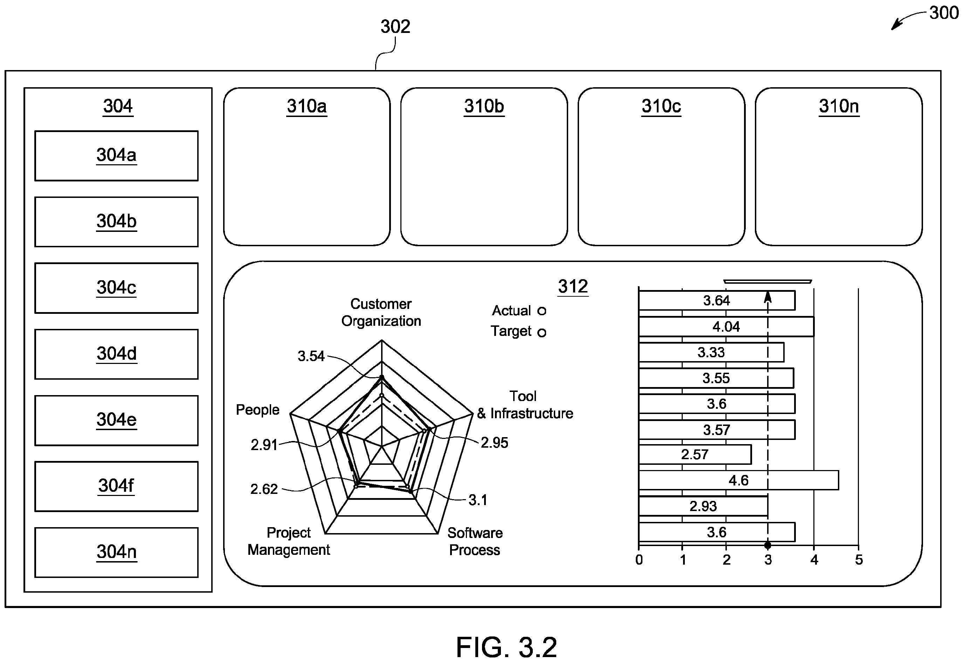

FIGURE.3.2 illustrates an exemplary dashboard report 300 generated by a dashboard framework system, in accordance with an embodiment of the present subject matter.

A dashboard framework system 304 has a display component 110 that generates a dashboard 302 of the analytics on a user interface, where the dashboard 302 has a plurality of selectable hierarchical levels 304a, 304b, 304c, 304d, 304e, 304f, ..., 304n, also represented together as a section 304 with each of the hierarchical levels 304a, 304b, 304c, 304d, 304e, 304f, ..., 304n including the at least one associated business attribute. Generally, the dashboard 302 have sections like business attribute sections 310a, 310b, 3106c, ..., 310n covering the status or reading with a scan/ graphs or visual depiction of business attributes and associated scans/ graphs/ visual depictions in 312 that develop when further details or options or next hierarchical levels are selected by the user 150.

Agile maturity, such as 304f features agile maturity index scores that are derived from assessments carried out by agile coaches on a periodic basis. This refers to details on five parameters organization culture, people, process, tools and technology, project management. An agile maturity index scores multiple parameters and showcases the agile health index derived from assessments carried out by agile coaches on a periodic basis. Drilling down into each of the parameters further is possible for better clarity and more details on the current state versus set target state for continuous improvement steps and actions. The figure represents the group rating chart and customer organisation as 312. The agile maturity index score indirectly impacts the performance of metrics in other categories like productivity, predictability, quality, and ROI. The agile health index helps enterprises as a guidepost during the transformation journey from doing agile to being agile.

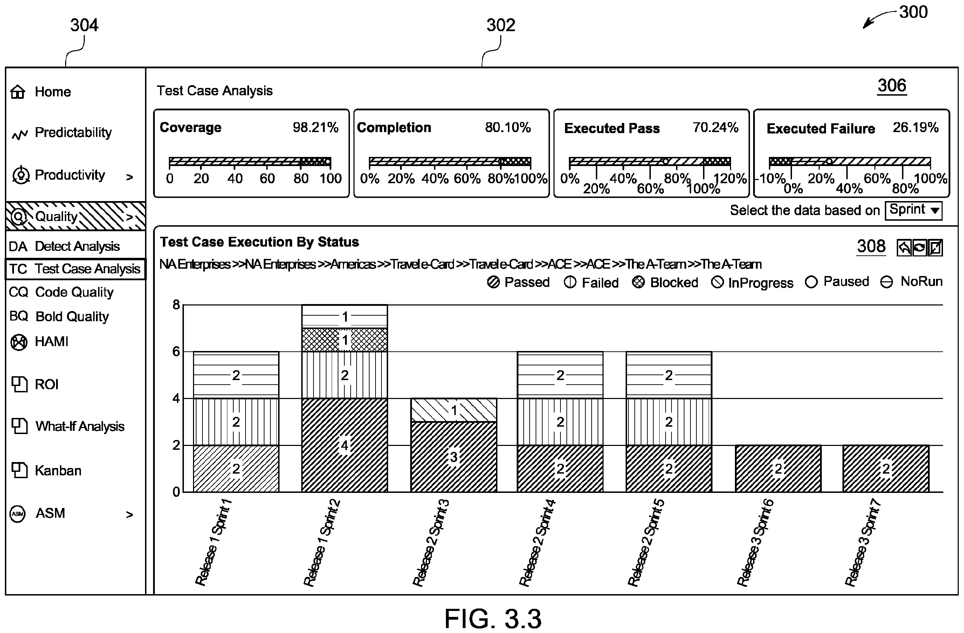

FIGURE.3.3 illustrates an exemplary dashboard report view 300 generated by a dashboard framework system, in accordance with an embodiment of the present subject matter.

Test coverage completion execution pass and execution failure gives test quality baseline to date to be considered during a retrospective. Test cases execution trend analysis 306 gives further breakdown by status 308 taken as the basis to showcase the trend analysis. Defect analysis is used to portray the quality of sprint outcomes to date another quality bass line to make a sprint retrospective more productive. Critical and high defect fix a ratio of critical and high severity defects raised to defects fixed giving an inference on sprint or release stability. Defect density, this gives the density of defects by sprint, is the weighted average by defect criticality to the number of story points delivered defects by status this gives and near real time depiction of defects categorized by status by sprint or by release. Defects by severity, gives a near real time depiction of defects categorized by severity by sprint or release.

Solution also analyses trade-offs and team productivity against code quality, automated code review tools such as SonarQube and are the source for the static code analysis measurements covering code complexity, code coverage, function count and technical debt. Continuous build and deployment is a given for optimal agility the focus here is the status on jobs governing automated builds and deployments at a project and code base branch level to help in root cause analysis. The dashboard 302 shows the measurable insights for projects following the campaign model. Measurements can be analysed at daily, weekly, monthly, quarterly, yearly and at any customizable period levels. Mean lead and cycle time with throughput allow one to take inclusive actions on productivity improvement measures while the average aging helps eliminate process and productivity blocks and improve team efficiency. Figure 3.3 represent a view as per a dashboard 302, described above. There are many such options available as per business or user needs. It is only one representation that is shown by way of example.

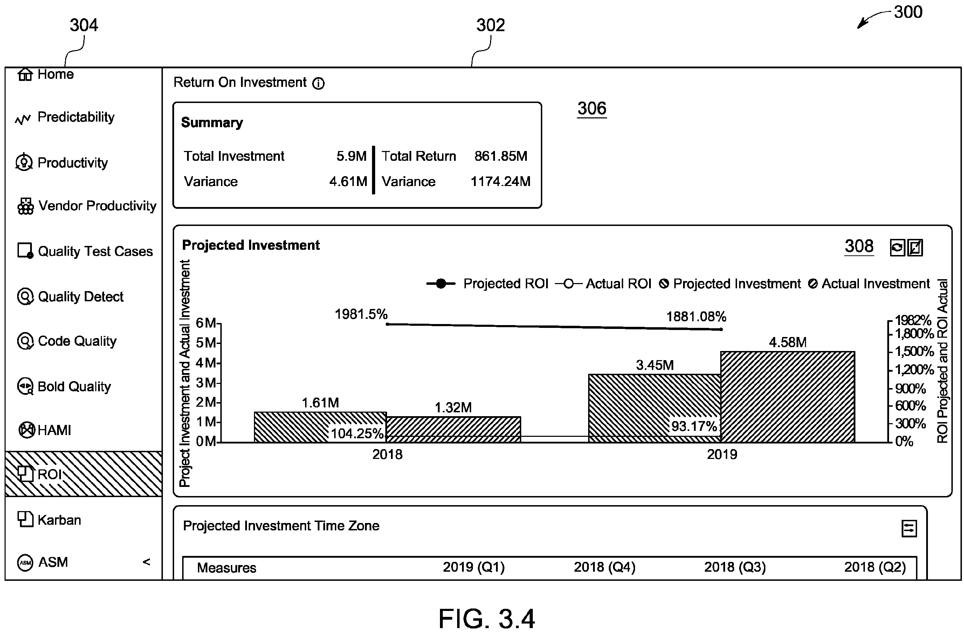

FIGURE.3.4 illustrates an exemplary dashboard report view 300 generated by a dashboard framework system, in accordance with an embodiment of the present subject matter.

Return on investment (ROI) 304 covers team's achievement % = actual business value vs. planned business value, ROI summary 306, projected investment 308. For C-level executives showcasing efficiency of investment (graph shows expected spend against actual spend along with ROI details. It also gives details of projected investment). Provision to track ROI exists, provided the financial data systems are made available for integration with solution.

The ASM dashboard provides near real time operational metrics to monitor and drive high quality to our customers there are multiple views by process, region, and portfolio. It showcases summarized visualization of incidents problems and change request by service SLAs timely RCA and schedule variance respectively for each of these views. Portfolio view provides a bird's-eye view at enterprise level of operational metrics including volume trends and SLA compliance it gives a near real time tickets trend analysis for a carefully selected set of metrics for the given period. Volume metric trends provides various representations of ticket volume by key dimensions including portfolio priority and status. The solution improves an enterprise's scaled agile maturity and enhance engineering effectiveness to maintain business agility. Figure 3.4 represent a view as per a dashboard 302, described above. There are many such options available as per business or user needs. It is only one representation that is shown by way of example.

Other benefits of the solution covers, cloud deployments, for example on AZURE, ASM - SLA based tracking on volumetric & timeliness metrics, easily configurable & customizable, scaled agile model metrics reporting, agile maturity index scores, aggregated views and filters at project, program and portfolio level, alerts and notifications on specific threshold, and downloadable reports for offline project reviews.

In one example, the tools used covers ALM Tools - TFS, JIRA; Build Quality - Jenkins; Prod Support - ServiceNow; Code Quality - SonarQube; Others - Excel; Log Files - Splunk; APM - APPDYNAMICS; ITSM Tools - Service Now, BMC Remedy, and alike.

In one of the exemplary embodiments of the present disclosure, the software development dashboard system may provide real-time or near real-time information updates, providing alerts and notifications when metrics fall below thresholds and targets. Additionally, the software development dashboard system and specially the connector component of the software development dashboard system may gather data from agile application lifecycle management tools. Further, the software development dashboard system may provide agile and application service management dashboards while also integrating service level agreement based tracking on volumetric and timeliness metrics for application service management projects.

In one of the exemplary embodiments of the present disclosure, the software development dashboard system may be customized as per the user's requirement, allowing a higher level of customization in the analytical component and display component, allowing different modules to integrate and interact with each other and create combinations and permutations without the need of changing any other detail in either of the parts of the software development dashboard system.

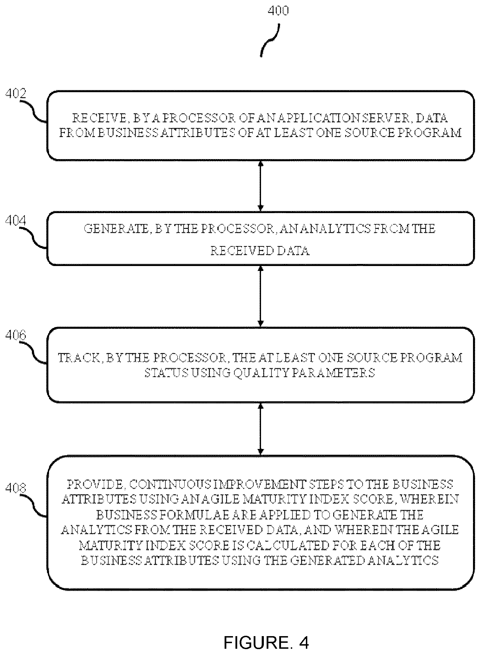

FIGURE.4 illustrates an exemplary flow diagram 400 of a method of a dashboard framework system, in accordance with an embodiment of the present subject matter.

In one implementation, a method 400 for a dashboard framework systemis shown. The method may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices. The order in which the method is described and is not intended to be construed as a limitation, and any number of the described method blocks can be combined in any order to implement the method or alternate methods. Furthermore, the method may be implemented in any suitable hardware, software, firmware, or combination thereof. However, for ease of explanation, in the embodiments described below, the method may be implemented in the above-described system.

At step/ block 402, receive, by a processor 140 of an application server 102,data from business attributes of at least one source program 130. In one implementation the data may be received by a connector component 204.

At step/ block 404, generate, by the processor 140, an analytics from the received data. In one implementation the analytics may be generated by an analytical component 112.

At step/ block 406, track, the at least one source program status using quality parameters. In one implementation the source program 130 may be tracked by an analytics engine 216 of the analytical component 112.

At step/ block 408, provide, continuous improvement steps to the business attributes using an agile maturity index score, wherein business formulae are applied to generate the analytics from the received data, and wherein the agile maturity index score is calculated for each of the business attributes using the generated analytics. In one implementation, the continuous improvement steps may be provided by an agile module 210 of the analytical component 112.

Thus, the method 400 helps in a dashboard framework system by generating the analytics while maintaining the agile nature of the application.

The present solution is used for an enterprise dashboard designed to collect a wide variety of software development data to provide actionable insights to key stakeholders across an enterprise. A few examples are shown using the method and system of the dashboard framework system, in accordance with an embodiment of the present subject matter. The following shows preparation, planning and execution along with outcome of the studies.

In an example, for an as-is implementation plan, a connector component 204 extracts the details from external third parties such as JIRA, TFS, SonarQube and an analytical component 112 manages data between a database 124 and an application on the display component 110 that consists of admin and metric application. A connector service 116 of the connector component 204 is a Windows service that extracts the Jira data in a specified interval. A due diligence is conducted via assigning an expert; providing access to ALM (JIRA); analysing ALM tool for readiness and identifying any custom needs; agree on as-is predictability and productivity metrics; review testing tool, code quality tool, build automation tool; providing access to testing, build and code quality tool; agree on as-is quality, build and code quality metrics; agree on pilot project(s) to be integrated for as-is implementation. The infrastructural prerequisites are 2 servers - 1 web server and 1 SQL server; provide access to expert to deploy and configure solution application. The solution application installation steps include installation on web server &SQL server; validate connectivity with ALM, testing, code quality and build tools; configure to edit/ delete unused metrics/ tabs; validate metrics for pilot projects and make any changes desired to show project data. With above steps the as-is implementation is complete, for rollout & customizations - discovery phase - review as-is implementation page by page and identify customization needs; agree on rollout & customizations to be implemented; estimate efforts for changes to be implemented.

In one other example, for a health care company a business challenge involved unprecedented view into software development lifecycle (SDLC)effectiveness, business units make technology decisions without long term considerations, continuous improvement tool for monitoring & risk identification at various decision making levels (scrum teams, projects, product/program, portfolio, org) and flexible view using data points from descriptive, predictive and prescriptive analytics. The solution provides wide range of technical, business & operational metrics with advanced analytics and industry benchmarking, single source of truth within IQVIA to enable stakeholders take informed decision. Proactive identification of pain areas to enable the team take preventive and corrective course to deliver deliverables on time and align business units on priorities to eliminate duplicate efforts and disjointed experience. The solution covered agile transformation of all business units comprising of software development and maintenance types of work to IQVIA scaled agile framework called HPE (high performance enterprise). The solution further provides enterprise dashboard tool that can be implemented across various user groups. The solution was implemented in the following sequence: backbone to achieve engineering effectiveness & a high performance enterprise, collects data from various IQVIA engagements to establish own agile benchmarks. The outcomes achieve dare tracking and monitoring, the increase in productivity by 20% from baselines using enterprise dashboard solution, improvement in quality by reducing production incidents by at least 10% by tracking quality metrics and overall improvement in agile maturity in organization leveraging solution to baseline and track the KPI's.

Although implementations of a system and a method for a dashboard framework system have been described in language specific to structural features and/or methods, it is to be understood that the appended claims are not necessarily limited to the specific features or methods described. Rather, the specific features and methods are disclosed as examples of implementations for the dashboard framework system.

## Claims

1. A dashboard framework systemfor monitoring business performance, the system comprising:
a processor (140);
a memory (142)operatively coupled to the processor (140); and
a connector component (204) configured to receive data from business attributes of at least one source program (130); and
an analytical component (112)configured to generate an analytics from the received data, the analytical component (112)comprising:
an analytics engine (216) to track the at least one source program status using quality parameters;
an agile module (210) to provide continuous improvement steps to the business attributes using an agile maturity index score;
wherein business formulae are applied to generate the analytics from the received data by the analytical component (112), and wherein the agile maturity index score is calculated for each of the business attributes by the analytical component (112) using the generated analytics.

2. The dashboard framework systemof claim 1, wherein the connector component (204) is configured to receive data from the business attributes for a user configured time period.

3. The dashboard framework systemof claim 1, wherein the connector component (204) has a plurality of sub-connectors for receiving data from a plurality of source programs.

4. Thedashboard framework system of claim 1, wherein the analytical component (112) further comprising: a test case module (214) to analyse a real time performance of a source program (130).

5. Thedashboard framework system of claim 1, wherein the analytics engine (216) provides a story-point analysis for monitoring the at least one source program (130) to various stakeholder levels, and a risk-projection analysis for highlighting a program risk.

6. The dashboard framework systemof claim 1, wherein the systemfurther comprising: a display component (110) configured to receive user inputs and to display the analytics as generated by the analytical component (112).

7. Thedashboard framework system of claim 6, wherein the display component (110) generates a dashboard (302) of the analytics on a user interface, wherein the dashboard (302) has a plurality of selectable hierarchical levels, each of the hierarchical levels including the at least one associated business attribute.

8. The dashboard framework systemof claim 1, wherein the systemfurther comprising:a server component (120) configured to have a database (124), wherein the database (124) has data ofthe business attributes for the connector component (204), and of thebusiness formulae for the analytical component (112).

9. A method for monitoring business performance, the method comprising:
receiving, by a processor (140) of an application server (102),data from business attributes of at least one source program (130);
generating, by the processor (140), an analytics from the received data, comprising;
tracking the at least one source program (130) status using quality parameters; providing continuous improvement steps to the business attributes using an agile maturity index score;
wherein business formulae are applied to generate the analytics from the received data, and wherein the agile maturity index score is calculated for each of the business attributes using the generated analytics.

10. Themethodof claim 9, wherein the receiving data from the business attributes is for a user configured time period.

11. Themethodof claim 9, wherein the receiving data is from a plurality of sub-connectors for receiving data from a plurality of source programs (130).

12. Themethodof claim 9, wherein the generating an analytics further comprising: analysing, by the processor (140), a real time performance of a source program (130).

13. Themethodof claim 9, wherein thetrackingof the at least one source program (130)further provides a story-point analysis for monitoring the at least one source program (130) to various stakeholder levels, and a risk-projection analysis for highlighting a program risk.

14. Themethodof claim 9, wherein the methodfurther comprising: receiving, by the processor (140), user inputs and displaying the analytics as generated.

15. Themethodof claim 14, wherein displayingthe analytics ona dashboard (302) by a user interface, wherein the dashboard (302) has a plurality of selectable hierarchical levels, each of the hierarchical levels including the at least one associated business attribute.
